# FASCICULE DE BREVET EUROPEEN

(11) **EP 1 961 646 B1**
(45) Date de publication et mention de la délivrance du brevet: **03.03.2010**
(21) Numéro de dépôt: 08002982.0
(22) Date de dépôt: 18.02.2008
(51) Int. Cl.: B62D 53/02, B62D 59/04, A01D 25/00

(54) **Engin automoteur à châssis articulé**
Selbstfahrendes Gerät mit Gelenkrahmen
Self-propelled machine with articulated chassis

(30) Priorité: 21.02.2007 FR 0701216
(43) Date de publication de la demande: 27.08.2008
(73) Titulaire: EXEL INDUSTRIES, 51206 Epernay (FR)
(72) Inventeur: Ballu, Patrick Jean Marie, 51100 Reims (FR)
(74) Mandataire: Gaillarde, Frédéric F. Ch.

(56) Documents cités:
- EP-A- 1 319 587
- DE-A1- 10 024 031
- FR-A- 2 737 641
- US-A- 5 092 422
- US-A1- 2005 230 934

## Description

La présente invention se rapporte à un engin automoteur à châssis articulé. Un tel engin automoteur est divulgué dans DE-A-10024031.

On connaît de la technique antérieure des engins automoteurs du type comprenant un châssis comportant au moins deux parties articulées l'une par rapport à l'autre autour d'un axe sensiblement vertical, chacune de ces parties étant montée sur au moins un essieu respectif, au moins l'un de ces essieux étant directeur et au moins l'un de ces essieux étant moteur, cet engin comprenant en outre des moyens pour faire pivoter sélectivement ces parties de châssis l'une par rapport à l'autre.

Un tel engin à châssis articulé permet de réduire le rayon de braquage par rapport à un engin analogue à châssis monobloc, ce qui est particulièrement avantageux notamment lorsque la longueur de l'engin est importante.

Tel est en particulier le cas de certains engins agricoles tels que les machines à arracher les betteraves, dont la longueur peut facilement atteindre une douzaine de mètres.

Pour ces machines à châssis articulé, une autre préoccupation constante est d'obtenir une excellente stabilité au sol. Pour cette raison, on a cherché à permettre la libre rotation d'un essieu par rapport à l'autre autour d'un axe sensiblement longitudinal, c'est-à-dire parallèle à la direction de déplacement de l'engin.

Dans ce but, on a été amené à envisager des liaisons de type rotule entre les deux parties de châssis, mais cela s'est révélé trop compliqué à fabriquer et à entretenir.

La présente invention a notamment pour but d'apporter une solution simple au problème de la stabilité au sol d'un engin à châssis articulé.

On atteint ce but de l'invention avec un engin automoteur, comprenant un châssis comportant au moins deux parties articulées l'une par rapport à l'autre autour d'un axe sensiblement vertical, chacune de ces parties étant montée sur au moins un essieu respectif, au moins l'un de ces essieux étant directeur, au moins l'un de ces essieux étant moteur, cet engin comprenant en outre des moyens pour faire pivoter sélectivement lesdites parties de châssis l'une par rapport à l'autre, et l'un desdits essieux est monté oscillant sur sa partie de châssis associée,
cet engin étant remarquable en ce que l'articulation entre lesdites parties est une liaison pivot.

Dans le cadre de la présente invention, le terme « oscillant » signifie que l'essieu concerné est susceptible de pivoter librement autour d'un axe sensiblement longitudinal par rapport à sa partie de châssis associée, permettant ainsi un contact permanent de toutes les roues de l'engin sur le sol, et donc une excellente stabilité de l'engin.

Grâce aux caractéristiques susmentionnées, on peut dissocier géographiquement l'articulation des deux essieux l'un par rapport à l'autre autour d'un axe sensiblement longitudinal de l'articulation des deux parties de châssis l'une par rapport à l'autre autour d'un axe sensiblement vertical : on obtient de la sorte deux d'articulations indépendantes, pouvant être réalisées chacune de manière simple avec des moyens classiques du type liaison pivot.

On s'affranchit de la sorte de la complexité et des problèmes d'entretien des systèmes d'articulation à rotule de la technique antérieure.

Suivant d'autres caractéristiques optionnelles de cet engin :
- lesdits moyens de pivotement comprennent au moins un vérin interposé entre lesdites deux parties montées pivotantes l'une par rapport à l'autre : un tel vérin permet de réaliser de manière simple ces moyens de pivotement ;
- ledit châssis comprend une partie avant, une partie centrale et une partie arrière, lesdites parties avant et arrière étant montées respectivement sur lesdits essieux, ladite partie avant étant librement articulée autour d'un axe sensiblement longitudinal par rapport à ladite partie centrale, formant ainsi ledit essieu oscillant, et lesdites parties centrale et arrière formant lesdites deux parties montées pivotantes l'une par rapport à l'autre : ce montage d'un essieu sur la partie avant du châssis permet de réaliser de manière simple un essieu oscillant ;
- ledit engin est destiné à l'arrachage de produits en terre tels que des betteraves, et comprend une effeuilleuse montée sur ladite partie avant de châssis : grâce à cet agencement, l'effeuilleuse peut suivre les variations de dévers du terrain ;
- ladite effeuilleuse est montée en porte-à-faux sur ladite partie avant de châssis : cet agencement permet de gagner de la place sous et à l'arrière de cette partie avant de châssis ;
- cet engin agricole comprend des moyens d'extraction et de convoyage montés sur ladite partie centrale de châssis : cette partie centrale de châssis étant très stable, on assure de la sorte une stabilité optimale des moyens d'extraction et de convoyage par rapport au sol;
- cet engin agricole comprend un réservoir de carburant monté sur ladite partie avant de châssis : cet agencement permet de libérer de l'espace dans la partie arrière de châssis, où l'on peut installer le moteur, une trémie, etc. ; de plus, cet agencement permet de répartir de manière optimale les masses sur le châssis, et d'augmenter ainsi la stabilité de la machine ; en outre, en isolant le réservoir de carburant de la zone de la machine où se trouvent le moteur et les commandes électriques de la machine, cet agencement permet de réduire les risques d'incendie ;
- cet engin comprend des moyens de stockage montés sur ladite partie arrière de châssis ;
- cet engin comprend un moteur monté sur ladite partie arrière de châssis : on utilise de la sorte au mieux l'espace disponible sur cette partie arrière de châssis ;
- cet engin comprend une cabine montée sur ladite partie centrale de châssis : cette disposition centrale contribue à l'amélioration de la stabilité de la machine ;
- ladite partie centrale de châssis présente sensiblement la forme d'un cadre ouvert ;
- l'autre essieu, c'est-à-dire celui qui n'est pas oscillant, est équipé d'un dispositif de correction d'assiette.

D'autres caractéristiques et avantages de la présente invention apparaîtront à la lumière de la description qui va suivre, et à l'examen des dessins ci-annexés, dans lesquels :
- la figure 1 représente de manière schématique une vue de côté une machine à arracher les betteraves conforme aux préceptes de la présente invention, et
- la figure 2 est une vue de dessus schématique de cette machine.

Sur ces figures, le sens d'avancement normal de cette machine à arracher les betteraves est indiqué par la flèche F.

Cette machine comprend un châssis 1 comportant lui-même une partie avant 3, une partie centrale 5 et une partie arrière 7.

La partie avant de châssis 3 est montée sur un essieu avant 9 et est articulée autour d'un axe sensiblement longitudinal A1 par rapport à la partie centrale de châssis 5.

Par « longitudinal » on entend sensiblement parallèle à la direction de déplacement de la machine.

Un dispositif d'effeuillage 11 est fixé sur la partie avant de châssis 3, et s'étend en porte-à-faux vers l'avant de cette partie avant de châssis.

Le réservoir à essence 12 de la machine est de préférence monté sur la partie avant de châssis 3.

Sur la partie centrale de châssis 5 est montée une cabine 13 pouvant recevoir l'opérateur qui assurera le fonctionnement de la machine.

Sous la partie centrale de châssis 5, sont suspendus des moyens d'extraction et convoyage des betteraves.

Dans l'exemple représenté, les moyens d'extraction comprennent des paires de patins 15 et des disques rotatifs 17, et les moyens de convoyage comprennent des grilles tournantes 19, l'ensemble de ces organes étant monté sur un sous châssis 21 lui-même suspendu sous la partie centrale de châssis 5.

Bien entendu, la présente invention n'est nullement limitée à ce type d'organes d'extraction et de convoyage : les moyens d'extraction pourraient par exemple comprendre de simple socs fixes ou des socs vibrants, et les moyens de convoyage pourraient comprendre des tapis mobiles ou des rouleaux de transport, connus en soi.

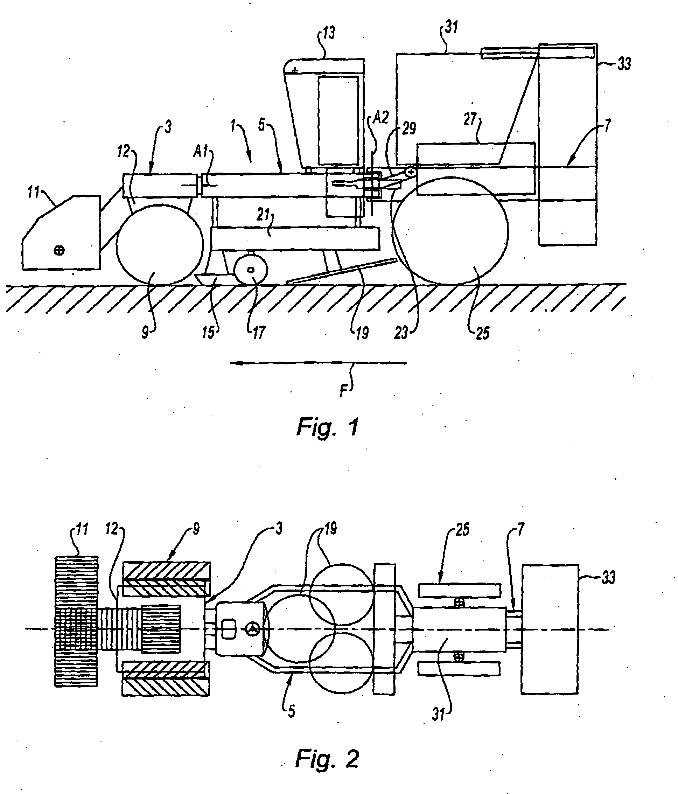

On notera également que, de manière avantageuse (voir notamment la figure 2), la partie centrale de châssis 5 peut être formée par un cadre ouvert, plutôt que par une poutre maîtresse centrale, comme c'est le cas dans les machines de la technique antérieure.

Dans ce cas, les conduites hydrauliques et les câbles électriques desservant les différents organes de la machine peuvent s'étendre le long et à l'intérieur des montants latéraux de ce cadre.

Un tel agencement permet de dégager complètement l'espace situé au-dessus des outils 15, 17, 19, et de faciliter ainsi le contrôle visuel de ces outils par un opérateur situé dans la cabine 13.

La partie arrière de châssis 7 est montée articulée par rapport à la partie centrale de châssis 5 autour d'un axe sensiblement vertical A2. Des moyens d'actionnement tels qu'un vérin hydraulique 23 sont interposés entre ces parties arrière 7 et centrale 5 de châssis.

La partie arrière de châssis 7 est montée sur un essieu arrière 25, et un moteur thermique 27 monté sur la partie arrière de châssis 7 assure la mise en oeuvre de l'ensemble des fonctionnalités de la machine.

Ce moteur thermique permet notamment la mise en mouvement de l'un ou des deux essieu(x) 9, 25, la mise en rotation des grilles tournantes 19, ainsi que le fonctionnement d'une centrale hydraulique permettant notamment d'agir sur le vérin 23.

La transmission de mouvement entre le moteur thermique 27 et les parties avant 3 et centrale 5 de châssis est assurée par un cardan, ou par une transmission hydraulique 29.

La partie arrière de châssis 7 supporte également une trémie 31 communiquant avec un tapis de convoyage ascendant couramment appelé « ascenseur » 33.

Le mode de fonctionnement et les avantages de la machine selon l'invention résultent directement de la description qui précède.

Lorsque cette machine se déplace dans un champ de betteraves, l'effeuilleuse 11 commence à débarrasser les betteraves des feuilles qui les surmontent.

Le fait que la partie avant de châssis 3 soit librement articulée autour de l'axe longitudinal A1 par rapport à la partie centrale de châssis 5, permet à l'essieu avant 9 de suivre les variations de dévers du terrain : on peut de la sorte maintenir en permanence les quatre roues de la machine au contact du sol, et obtenir ainsi une excellente stabilité.

Le fait que l'effeuilleuse 11 soit reliée à la partie avant de châssis 3 permet de maintenir cette effeuilleuse en permanence parallèle au sol, et ainsi de réaliser un effeuillage très efficace.

Comme cela est connu en soi, les paires de patins 15 et de disques 17 permettent d'extraire efficacement les betteraves du sol et de les envoyer sur les grilles tournantes 19 qui réalisent un déterrage de ces betteraves et les convoient vers la trémie 31 ou directement vers l'extérieur.

Le cas échéant, l'ascenseur 33 permet 'extraire les betteraves de la trémie 31 et de les convoyer vers l'extérieur, par exemple à destination d'une remorque traînée par un tracteur suiveur.

Lorsque l'opérateur situé à l'intérieur de la cabine 13 souhaite faire tourner sa machine, par exemple afin de faire demi-tour en bout de champ, il agit sur celui ou ceux des deux essieux 9, 25 qui est (sont) directeur(s).

Afin de réduire le rayon de braquage, il peut également agir sur le vérin 23 de manière à faire pivoter la partie arrière de châssis 7 par rapport à la partie centrale de châssis 5 autour de l'axe sensiblement vertical A2.

Comme on peut le comprendre à la lumière de la description qui précède, les moyens permettant d'articuler la partie avant de châssis 3 par rapport à la partie centrale de châssis 5 autour de l'axe sensiblement longitudinal A1 d'une part, et les moyens permettant d'articuler la partie arrière de châssis 7 par rapport à la partie centrale de châssis 5 autour de l'axe sensiblement vertical A2 d'autre part, sont situés en des emplacements distincts de la machine selon l'invention, et sont complètement indépendants.

Chacun de ces moyens peut comprendre une liaison pivot tout à fait classique, de conception très simple.

On peut de la sorte obtenir une machine présentant à la fois de faibles rayons de braquage et une excellente stabilité au sol, dans laquelle aucun moyen complexe d'articulation n'est nécessaire : on peut ainsi réduire le coût de fabrication et gagner en fiabilité par rapport aux machines à articulation à rotule de la technique antérieure.

On notera que le fait que le réservoir à carburant 12 soit placé sur la partie avant de châssis 3 permet d'améliorer l'adhérence des roues avant de la machine sur le sol, et permet ainsi une meilleure pénétration des outils 15, 17 dans le sol.

Bien entendu, la présente invention n'est nullement limitée à l'exemple décrit et représentée, fourni à titre uniquement illustratif.

C'est ainsi par exemple que l'on peut envisager que l'essieu arrière 25 soit équipé d'un dispositif de correction d'assiette, c'est-à-dire d'un dispositif du type à commande hydraulique permettant de modifier activement l'inclinaison de cet essieu par rapport à la partie arrière de châssis 7 : un tel dispositif permet de compenser le dévers du terrain, et ainsi :
- de mieux répartir le poids de la trémie 31 sur les roues arrière, et
- de maintenir l'horizontalité de la partie centrale de châssis 5 et de la cabine 13, dans un souci de confort pour l'opérateur.

## Revendications

1. Engin automoteur, comprenant un châssis (1) comportant au moins deux parties (5, 7) articulées l'une par rapport à l'autre autour d'un axe sensiblement vertical (A2), chacune de ces parties (5, 7) étant montée sur au moins un essieu respectif (9, 25), au moins l'un de ces essieux étant directeur, au moins l'un de ces essieux étant moteur, et au moins l'un (9) de ces essieux étant monté oscillant autour d'un axe sensiblement longitudinal par rapport à sa partie de châssis associée (5), cet engin comprenant en outre des moyens (23) pour faire pivoter sélectivement lesdites parties (5, 7) l'une par rapport à l'autre autour dudit axe sensiblement vertical (A2),
cet engin étant **caractérisé en ce que** l'articulation entre lesdites parties (5, 7) est une liaison pivot.

2. Engin selon la revendication 1, **caractérisé en ce que** lesdits moyens de pivotement comprennent au moins un vérin (23) interposé entre lesdites deux parties (5, 7) montées pivotantes l'une par rapport à l'autre.

3. Engin selon l'une des revendications 1 ou 2, **caractérisé en ce que** ledit châssis (1) comprend une partie avant (3), une partie centrale (5) et une partie arrière (7), lesdites parties avant (3) et arrière (7) étant montées respectivement sur lesdits essieux (9, 25), ladite partie avant (9) étant librement articulée autour d'un axe (A1) sensiblement longitudinal par rapport à ladite partie centrale (5), formant ainsi ledit essieu oscillant, et lesdites parties centrale (5) et arrière (7) formant lesdites deux parties montées pivotantes l'une par rapport à l'autre.

4. Engin selon la revendication 3 destiné à l'arrachage de produits en terre tels que des betteraves, **caractérisé en ce qu'**il comprend une effeuilleuse (11) montée sur ladite partie avant de châssis (3).

5. Engin selon la revendication 4, **caractérisé en ce que** ladite effeuilleuse (11) est montée en porte-à-faux sur ladite partie avant de châssis (3).

6. Engin selon l'une quelconque des revendications 3 à 5, **caractérisé en ce qu'**il comprend des moyens d'extraction (15) et de convoyage (17) montés sur ladite partie centrale de châssis.

7. Engin selon l'une quelconque des revendications 3 à 6, **caractérisé en ce qu'**il comprend un réservoir de carburant (12) monté sur ladite partie avant de châssis (3).

8. Engin selon l'une quelconque des revendications 3 à 7, **caractérisé en ce qu'**il comprend des moyens de stockage (31) montés sur ladite partie arrière de châssis (7).

9. Engin l'une quelconque des revendications 3 à 8, **caractérisé en ce qu'**il comprend un moteur (27) monté sur ladite partie arrière de châssis (7).

10. Engin selon l'une quelconque des revendications 3 à 9, **caractérisé en ce qu'**il comprend une cabine (13) montée sur ladite partie centrale de châssis (5).

11. Engin selon l'une quelconque des revendications précédentes, **caractérisé en ce que** ladite partie centrale de châssis (5) présente sensiblement la forme d'un cadre ouvert.

12. Engin selon l'une quelconque des revendications précédentes, **caractérisé en ce que** l'autre essieu (25), c'est-à-dire celui qui n'est pas oscillant, est équipé d'un dispositif de correction d'assiette.

## Claims

1. Self-propelled machine comprising a chassis (1) including at least two parts (5, 7) articulated relative to one another about a substantially vertical axis (A2), each of these parts (5, 7) being mounted on at least one respective axle (9, 25), at least one of these axles being a steered axle, at least one of these axles being a driven axle, and at least one (9) of these axles being mounted to rock about a substantially longitudinal axis relative to its associated chassis part (5), this machine further comprising means (23) for making the said parts (5, 7) pivot selectively relative to one another about the said substantially vertical axis (A2),
this machine being **characterized in that** the articulation between said parts (5, 7) is a pivot connection.

2. Machine according to Claim 1, **characterized in that** the said means of pivoting comprise at least one actuating cylinder (23) interposed between the said two parts (5, 7) that are mounted such that they can pivot relative to one another.

3. Machine according to one of Claims 1 and 2, **characterized in that** the said chassis (1) comprises a front part (3), a central part (5) and a rear part (7), the said front (3) and rear (7) parts being mounted respectively on the said axles (9, 25), the said front part (3) being articulated freely about a substantially longitudinal axis (A1) relative to the said central part (5), thus forming the said rocking axle, and the said central (5) and rear (7) parts forming the said two parts that are mounted such that they can pivot relative to one another.

4. Machine according to Claim 3 intended for uprooting products from the ground such as beet, **characterized in that** it comprises a leaf stripper (11) mounted on the said chassis front part (3).

5. Machine according to Claim 4, **characterized in that** the said leaf stripper (11) is mounted such that it overhangs from the said chassis front part (3).

6. Machine according to any one of Claims 3 to 5, **characterized in that** it comprises extraction (15) and conveying (17) means mounted on the said chassis central part.

7. Machine according to any one of Claims 3 to 6, **characterized in that** it comprises a fuel tank (12) mounted on the said chassis front part (3).

8. Machine according to any one of Claims 3 to 7, **characterized in that** it comprises storage means (31) mounted on the said chassis rear part (7).

9. Machine according to any one of Claims 3 to 8, **characterized in that** it comprises an engine (27) mounted on the said chassis rear part (7).

10. Machine according to any one of Claims 3 to 9, **characterized in that** it comprises a cab (13) mounted on the said chassis central part (5).

11. Machine according to any one of the preceding claims, **characterized in that** the said chassis central part (5) is substantially in the form of an open frame.

12. Machine according to any one of the preceding claims, **characterized in that** the other axle (25), that is to say the one that is not a rocking axle, is equipped with an attitude-correction device.

## Patentansprüche

1. Selbstfahrendes Gerät mit einem Fahrgestell (1), das mindestens zwei Teile (5, 7) aufweist, die um eine im Wesentlichen senkrechte Achse (A2) aneinander angelenkt sind, wobei jedes dieser Teile (5, 7) auf mindestens eine jeweilige Wagenachse (9, 25) montiert ist, wobei mindestens eine dieser Wagenachsen eine Lenkachse ist, wobei mindestens eine dieser Wagenachsen eine Antriebsachse ist, und wobei mindestens eine (9) dieser Wagenachsen um eine bezüglich ihres zugeordneten Fahrgestellteils (5) im Wesentlichen längs verlaufende Achse schwingend montiert ist, wobei dieses Gerät außerdem Einrichtungen (23) aufweist, um die Teile (5, 7) um die im Wesentlichen senkrechte Achse (A2) selektiv zueinander schwenken zu lassen,
wobei dieses Gerät **dadurch gekennzeichnet ist, dass** die Gelenkverbindung zwischen den Teilen (5, 7) eine Drehzapfenverbindung ist.

2. Gerät nach Anspruch 1, **dadurch gekennzeichnet, dass** die Schwenkeinrichtungen mindestens einen Arbeitszylinder (23) enthalten, der zwischen den zwei zueinander schwenkbar montierten Teilen (5, 7) angeordnet ist.

3. Gerät nach einem der Ansprüche 1 oder 2, **dadurch gekennzeichnet, dass** das Fahrgestell (1) ein vorderes Teil (3), ein mittleres Teil (5) und ein hinteres Teil (7) aufweist, wobei das vordere (3) und das hintere Teil (7) auf die Wagenachsen (9, 25) montiert sind, wobei das vordere Teil (3) frei um eine Achse (A1) angelenkt ist, die im Wesentlichen längs zum mittleren Teil (5) verläuft, wodurch die schwingende Wagenachse gebildet wird, und das mittlere (5) und das hintere Teil (7) die zwei Teile bilden, die zueinander schwenkbar montiert sind.

4. Gerät nach Anspruch 3, das zum Ausreißen von Erdprodukten wie Rüben bestimmt ist, **dadurch gekennzeichnet, dass** es ein Entlaubungsgerät (11) enthält, das auf das vordere Fahrgestellteil (3) montiert ist.

5. Gerät nach Anspruch 4, **dadurch gekennzeichnet, dass** das Entlaubungsgerät (11) freitragend auf das vordere Fahrgestellteil (3) montiert ist.

6. Gerät nach einem der Ansprüche 3 bis 5, **dadurch gekennzeichnet, dass** es Entnahme- (15) und Beförderungseinrichtungen (17) enthält, die auf das mittlere Fahrgestellteil montiert sind.

7. Gerät nach einem der Ansprüche 3 bis 6, **dadurch gekennzeichnet, dass** es einen Kraftstofftank (12) enthält, der auf das vordere Fahrgestellteil (3) montiert ist.

8. Gerät nach einem der Ansprüche 3 bis 7, **dadurch gekennzeichnet, dass** es Lagerungseinrichtungen (31) enthält, die auf das hintere Fahrgestellteil (7) montiert sind.

9. Gerät nach einem der Ansprüche 3 bis 8, **dadurch gekennzeichnet, dass** es einen Motor (27) enthält, der auf das hintere Fahrgestellteil (7) montiert ist.

10. Gerät nach einem der Ansprüche 3 bis 9, **dadurch gekennzeichnet, dass** es eine Kabine (13) enthält, die auf das mittlere Fahrgestellteil (5) montiert ist.

11. Gerät nach einem der vorhergehenden Ansprüche, **dadurch gekennzeichnet, dass** das mittlere Fahrgestellteil (5) im Wesentlichen die Form eines offenen Rahmens hat.

12. Gerät nach einem der vorhergehenden Ansprüche, **dadurch gekennzeichnet, dass** die andere Wagenachse (25), d.h. diejenige, die nicht schwingt, mit einer Niveauregulierungsvorrichtung ausgestattet ist.
